# EUROPÄISCHE PATENTSCHRIFT

(11) **EP 1 016 703 B1**
(45) Veröffentlichungstag und Bekanntmachung des Hinweises auf die Patenterteilung: **06.02.2002**
(21) Anmeldenummer: 99123226.5
(22) Anmeldetag: 25.11.1999
(51) Int. Cl.: C09K 19/40, C08G 77/38

(54) **Flüssigkristalline Silicone mit erhöhter UV-Beständigkeit**
Liquid crystalline silicones with improved UV stability
Silicones liquides cristallins à stabilité UV élevée

(30) Priorität: 14.12.1998 DE 19857691
(43) Veröffentlichungstag der Anmeldung: 05.07.2000
(73) Patentinhaber: Consortium für elektrochemische Industrie GmbH, 81379 München (DE)
(72) Erfinder: Häberle, Norman, Dr., 80689 München (DE); Küpfer, Jürgen, Dr., 80686 München (DE); Leigeber, Horst, 82041 Oberhaching (DE)
(74) Vertreter: Fritz, Helmut, Dr.

(56) Entgegenhaltungen:
- EP-A- 0 358 208
- EP-A- 0 446 912
- EP-A- 0 601 483
- WO-A-94/09086
- DE-A- 4 327 359
- DE-A- 19 726 047
- BREHMER M ET AL: "FERROELECTRIC LIQUID-CRYSTALLINE ELASTOMERS" MACROMOLECULAR CHEMISTRY AND PHYSICS,DE,WILEY VCH, WEINHEIM, Bd. 195, Nr. 6, 1. Juni 1994 (1994-06-01), Seiten 1891-1904, XP000464093 ISSN: 1022-1352

## Beschreibung

Die Erfindung betrifft vernetzbare flüssigkristalline Organosiloxane (LC-Organosiloxane) mit erhöhter UV-Beständigkeit, Verfahren zu deren Herstellung sowie deren Verwendung.

Die Herstellung und Verwendung vernetzbarer LC-Organosiloxane ist im Grundsatz bekannt, beispielsweise aus US-A-5,211,877 oder US-A-5,362,315. Diese Verbindungen enthalten neben den primär eigenschaftsbestimmenden Mesogenen auch in einstellbaren Anteilen Molekülbestandteile, die einerseits zu den mesogenen Eigenschaften der Silicone beitragen, andererseits aber durch anhängende, polymerisierbare Gruppen befähigt sind, bestimmte, für die so hergestellten vernetzten LC-Silicone charakteristische physikalische und chemische Eigenschaften durch dreidimensionale Vernetzung irreversibel zu fixieren. In Abhängigkeit von Art und Menge der Zumischung von weiteren, copolymerisierbaren Mesogenen und/oder beigemischten weiteren Chiralika und sonstigen Bestandteilen bei der Vernetzung können so beispielsweise Pigmente hergestellt werden, deren Farbe auf der cholesterischen Phase eines copolymerisierten, optisch aktiven Mesogens beruht.

Die in US-A-5,211,877 und US-A-5,362,315 genannten LC-Pigmente genügen zwar den meisten Erfordernissen, weisen aber den Nachteil auf, gegen UV-Licht nicht ausreichend beständig zu sein.

Aufgabe der Erfindung war es deshalb, besser geeignete Vernetzerbausteine bereitzustellen, aus denen durch günstigeren Aufbau der Moleküle UV-stabile LC-Organosiloxane hergestellt werden können.

Gegenstand der Erfindung sind vernetzbare LC-Organosiloxane, enthaltend Einheiten der allgemeinen Formel 1,

[R_{b}Mes_{c}SiO_{(4-b-c)/2}] (1),

in der
- **R**: C₁-C₄-Alkylreste,
- **Mes**: mindestens eine Gruppe der allgemeinen Formel 2 und gegebenenfalls der allgemeinen Formel 3
- **b**: die Werte 0, 1 oder 2 und
- **c**: die Werte 1, 2, 3 oder 4 bedeuten,
mit der Maßgabe, daß die Summe der Werte aus b und c maximal 4 beträgt,
wobei die Gruppen **Mes** der allgemeinen Formeln 2 und 3 folgenden Aufbau zeigen

-(CH₂)ₚ-(O)_{q}-A-[B-A]ᵣ-E-F-VN (2),

-(CH₂)ₘ-(O)ₙ-(A)ₜ-Q-X (3),

in denen
- **A**: einen zweiwertigen Rest aus der Gruppe 1,4-Cyclohexylenring, 4,4'-Bicyclohexylenrest, 1,4-Phenylenring, 2,6-Naphthylenrest, 2,7-Naphthylenrest, 2,5-(1,3-Dioxanylen)ring und Pyrimidinylrest,
- **Q**: einen zweiwertigen Rest aus der Gruppe -COO-, -OCO-, -O-, chemische Bindung oder -O-(C=O)-O-,
- **X**: einen Cholesteryl-, Dihydrocholesteryl-, Doristeryl-, Isosorbidyl-, Isomannidyl- oder Cholsäurerest oder einen unsubstituierten oder substituierten Rest, der ausgewählt wird aus 1,4-Phenylen-, 4,4'-Biphenylyl-, 1,4-Cyclohexylen-, 4,4'-Bicyclohexylen-, 4,4'-Cyclohexylenphenylen, 2,5-(1,3-Dioxanylen)- und Pyrimidinylrest, wobei der Substituent ein C₁- bis C₅-Alkoxyrest, C₁- bis C₅-Alkylrest, Cyanorest, Chlorrest oder Nitrorest sein kann,
- **B**: einen zweiwertigen Rest aus der Gruppe chemische Bindung, -O-CH₂-, -CH₂-O-, -CH₂-CH₂-, -CH=CH-, -COO- und -OCO-,
- **E**: einen zweiwertigen Rest aus der Gruppe chemische Bindung,-O-, -COO-, -OCO- und -CH₂-O-,
- **F**: eine Kette aus 0 bis 11 CH₂-Gruppen, in der einzelne, einander nicht benachbarte CH₂-Gruppen durch Sauerstoff ersetzt sein können,
- **VN**: eine Gruppe -COO-CH=CH₂, -COO-C(CH₃)=CH₂, -O-CH=CH₂, eine Oxiranylgruppe, oder eine Gruppe -(CH₂)ᵤ-OCH=CH₂
- **u**: ganze Zahlen von 2 bis 8,
- **m und p**: ganze Zahlen von 3 bis 7,
- **n und q**: 0 oder 1, und
- **t**: ganze Zahlen von 1 bis 3 ,
- **r**: ganze Zahlen von 1 bis 3 bedeuten,
mit der Maßgabe, daß durch die Kombinationen von Ringen A mit Bindegruppen B keine Phenylesterderivate aliphatischer, aromatischer oder heteroaromatischer Carbonsäuren möglich sein sollen.

Die Erfindung beruht auf der Entdeckung, daß die Unbeständigkeit gegen UV-Licht der bekannten vernetzbaren LC-Organosiloxane und vernetzten LC-Silicone vor allem dadurch bewirkt wird, daß als Mesogenanteile-Carbonsäurephenylester eingesetzt werden, die durch normale Veresterungsreaktionen preisgünstig und technisch unkompliziert zugänglich sind. Phenolester unterliegen aber bei Einwirkung von UV-Licht einer Umlagerung dieser Molekülteile, die aus der Literatur als "Photo-Fries-Umlagerung" bekannt ist. Bereits Tageslicht enthält dazu schon genügend UV-Licht.

Bei dieser Umlagerung entsteht aus zum Aufbau von flüssigkristallinen Phasen verwendeten 4-substituierten Phenylestern oder eingebauten Fragmenten dieser Ester im Mesogenteil ein Gemisch von aromatischen Ketonen und sonstigen Verbindungen, die meist stärker verfärbt sind und in denen die ursprünglich in 4-Stellung zum Phenolsauerstoff befindlichen Substituenten in andere, der Ausbildung von LC-Phasen hinderliche Positionen gebracht werden. Die aus der Carboxyl-Bindegruppe entstehende Ketogruppe behindert ebenfalls die Ausbildung von LC-Phasen.

Die vernetzbaren LC-Organosiloxane, enthaltend Einheiten der allgemeinen Formel 1 vermeiden Mesogenanteile, die Phenylester von Carbonsäuren enthalten. Dadurch sind die LC-Organosiloxane, enthaltend Einheiten der allgemeinen Formel 1 UV-stabiler.

Laterale Phenylsubstituenten wie z. B. Fluorreste in den ortho-Stellungen zu 1- und/oder 4-Substituenten führen zu keiner Unbeständigkeit gegen UV-Licht.

Die vernetzbaren LC-Organosiloxane, enthalten vorzugsweise 1 bis 70 Einheiten der allgemeinen Formel 1.

Die erfindungsgemäßen Verbindungen können zur Erzielung besonderer Eigenschaften zusammen mit isolierten weiteren Komponenten wie z. B. Vernetzerbausteinen, als Einzelverbindungen oder als Gemische davon und/oder mit weiteren eigenschaftsgebenden, copolymerisierbaren Verbindungen, beispielsweise weitere chirale, hydrosilylierfähige Verbindungen zur Einstellung gesuchter Eigenschaften wie z. B. gewünschten Reflexionswellenlängen oder mit nicht copolymerisierbaren Verbindungen gemischt und zusammen vernetzt werden.

Als zusätzliche copolymerisierbare Vernetzerbausteine können bekannte Verbindungen dienen, die vorzugsweise an entgegengesetzten Enden langgestreckter Moleküle einerseits eine endständige und damit hydrosilylierfähige Doppel- oder Dreifachbindung, andererseits eine vernetzbare Gruppe wie den Acryloylrest oder den Methacryloylrest tragen. Diese Verbindungen entsprechen beispielsweise der allgemeinen Formel 4

CH₂=CH-(CH₂)ₚ₋₂-(O)_{q}-A-[B-A]ᵣ-E-F-VN (4),

in der **A, B, E, F, VN, p, q** und **r** die für die allgemeinen Formeln 2 und 3 angegebenen Bedeutungen annehmen können, wobei im Bedarfsfall hier auch Anteile von zusätzlichen Vernetzerbausteinen vorkommen können, die auch Phenolestergruppierungen enthalten können, wenn dadurch die UV-Stabilität des Gesamtsystems nicht beeinträchtigt wird, aber sonstige, wünschenswerte Eigenschaften wie z. B. eine niedrige Glastemperatur und/oder eine höhere Vernetzungsdichte von damit hergestellten vernetzten LC-Organosiloxanen erreicht werden können. Ein Beispiel für eine derartige Verbindung ist 4-Allyloxybenzoesäure-(4-methacryloyloxyphenyl)ester, bekannt aus WO 94/09086.

Darüber hinaus können weitere mesogene oder nicht mesogene Verbindungen, die mindestens eine, aber auch mehrere, polymerisierbare Gruppen enthalten, den erfindungsgemäßen Organosiloxanen zugemischt werden und gemeinsam mit diesen zu einer dreidimensional vernetzten unlöslichen LC-Substanz, wie Pigment umgesetzt werden. Beispiele für solche zumischbaren Verbindungen sind Vernetzerbausteine der allgemeinen Formel 5,

CH₂=CH-(CH₂)ₚ₋₂-(O)_{q}-A-[B-A]ᵣ-E-F-VN (5),

worin **A, B, E, F, VN, p, q** und **r** die für die allgemeine Formel 2 angegebenen Bedeutungen aufweisen, Bisacrylate oder Bismethacrylate mesogener Verbindungen der allgemeinen Formel 6

VN-(CH₂)ᵣ-[M-A]ₜ-M-(CH₂)ᵣ-VN (6),

in der
- **M**: ein Sauerstoffatom, eine Carboxylgruppe oder eine Oxycarbonylgruppe bedeutet und
- **VN, A, r** und **t**: die vorstehenden Bedeutungen annehmen können.

Diese können alleine oder als Gemisch verschiedener Verbindungen der allgemeinenen Formeln 5 und 6 oder im Gemisch mit nichtmesogenen Bisacrylaten und/oder Bismethacrylaten eingesetzt werden.

Vorzugsweise bedeuten in der allgemeinen Formel 5
- **p**: die Werte 3 bis 6,
- **A**: einen 1,4-Phenylenrest und
- **VN**: einen Methacryloylrest.

Beispiele für nichtmesogene Verbindungen, die als Zusatzkomponenten verwendet werden können, sind Bisacrylate oder Bismethacrylate geradkettiger oder verzweigter aliphatischer oder cycloaliphatischer Diole oder Triole oder von Polyethern, Trismethacrylate oder Bisvinylether aliphatischer Diole, einzeln oder als Gemische solcher Verbindungen.

Außerdem können die erfindungsgemäßen LC-Organosiloxane auch mit Substanzen abgemischt werden, die keine polymerisierbaren Gruppen enthalten und in dem nach der Polymerisation entstehenden Stoff als externer Weichmacher fungieren. Beispiele für diese Art Verbindungen sind Phthalsäurediester, Sebacinsäurediester oder sonstige, zu diesem Zweck üblicherweise verwendete Verbindungen.

Vor der Vernetzung können die flüssigkristallinen Organosiloxane auch mit weiteren eigenschaftsgebenden, copolymerisierbaren Verbindungen, beispielsweise weiteren chiralen, hydrosilylierfähigen oder nicht hydrosilylierfähigen Verbindungen zur Einstellung gesuchter Eigenschaften wie z. B. gewünschten Reflexionswellenlängen vermischt werden. Ebenso können farbgebende Verbindungen zugemischt werden.

Auf Grund ihrer besonderen Eigenschaften, nämlich erhöhte Elastizität damit hergestellter Produkte, einfacherer Zugang zu den Verbindungen und höhere Brillanz der damit hergestellten Farbkörper, sind Verbindungen der allgemeinen Formel 1 bevorzugt, in denen
- **R**: Methylreste,
- **m und p**: ganze Zahlen von 3 bis 5,
- **X**: ein Cholesterylrest, ein Doristerylrest, ein Isosorbidylrest oder ein unsubstituierter oder in 4-Stellung substituierter Phenylrest, dessen Substituenten C₁- bis C₃-Alkoxyreste, C₁- bis C₃-Alkylreste, Cyanorest oder Nitrorest, und
- **B**: eine chemische Bindung oder eine Gruppe -O-CH₂-, -CH₂-O- oder -CH₂-CH₂- bedeuten.

Vorzugsweise sind die erfindungsgemäßen UV-beständigen Organosiloxane offenkettig, cyclisch oder Silsequioxane, besonders bevorzugt sind cyclische Siloxane.

Die erfindungsgemäßen UV-beständigen, hochvernetzbaren, flüssigkristallinen Organosilicone sind nach grundsätzlich bekannten Verfahren dadurch herstellbar, daß Organosiliciumverbindungen, enthaltend Einheiten der allgemeinen Formel 7

[R_{b}H_{c}SiO_{(4-b-c)/2}] (7)

in der **R**, **b** und **c** die in der allgemeinen Formel 1 angegebenen Bedeutungen aufweisen, vorzugsweise in Gegenwart von mindestens einem Metall der Platingruppe und/oder dessen Verbindungen umgesetzt werden mit Verbindungen der allgemeinen Formeln 5 und gegebenenfalls 8

CH₂=CH-(CH₂)ₘ₋₂-(O)ₙ-(A)ₜ-Q-X (8),

worin **A, Q, X, m, n,** und **t** die für die allgemeine Formel 3 angegebenen Bedeutungen aufweisen.

Die Verbindungen der allgemeinen Formel 5 sind dadurch gekennzeichnet, daß sie an einem Ende des bevorzugt stabförmigen Moleküls eine endständige, hydrosilylierbare Doppelbindung aufweisen, am anderen Ende aber eine in ihrer Reaktivität von der olefinischen verschiedene, polymersierbare Gruppe, die zwar vernetzbar ist, aber die Hydrosilierung der olefinischen Doppelbindung nicht behindert.

Die vorstehende Umsetzung erfolgt vorzugsweise in Gegenwart von mindestens einem Metall der Platingruppe und/oder dessen Verbindungen als Katalysator. Die Summe der Molzahlen der Verbindungen der allgemeinen Formeln 7 und 8 entspricht, abhängig von der jeweiligen Reaktivität, dem 0,75- bis 1,25-fachen der Summe aller Si-H-Bindungen in den Organosiloxanen der allgemeinen Formel 7.
Die Zusammensetzung der Verbindungen allgemeinen Formeln 7 und 8 ist frei wählbar mit der Maßgabe, daß mindestens eine Si-H-Bindung des Silans der allgemeinen Formel 5 mit einer Verbindung der allgemeinen Formel 8 umgesetzt wird.

Beispiele für Hilfsstoffe sind bekannte anorganische oder organische Pigmente, Haftvermittler, weitere Polymere, Emulgatoren, Stabilisatoren und andere, zumeist übliche Zusätze.

Beispiele für Metalle der Platingruppe und/oder deren Verbindungen - nachfolgend Platinkatalysator genannt -, die das erfindungsgemäße Verfahren bewirken können, sind Platin, Palladium, Rhodium, Iridium und deren Verbindungen, vorzugsweise Platin und/oder dessen Verbindungen. Es können hier alle Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auch auf Trägern, wie Siliciumdioxyd, Aluminiumoxyd oder Aktivkohle befinden kann, Verbindungen oder Komplexe von Platin, wie Platinhalogenide, z. B. PtCl₄, H₂PtCl₆ x 6 H₂O, Na₂PtCl₄ x 4 H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆ x 6 H₂O und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gammapicolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe.

Platinkatalysator wird vorzugsweise in Mengen 0,05 bis 0,50 mmol, jeweils berechnet als elementares Platin und bezogen auf die Molzahl derjenigen Reaktionskomponente - also den Verbindung(en) der allgemeinen Formel 2 bzw. 3 bzw. der Siloxan-Derivate mit mindestens einem direkt an Silicium gebundenem Wasserstoffatom - welche im Unterschuß oder in stöchiometrischer Menge vorliegt.

Die Reaktion wird vorzugsweise bei Temperaturen von 0 °C bis 150 °C, vorzugsweise bei Drücken von 0,05 MPa bis 2,0 MPa durchgeführt.

Sollte das Siloxan der allgemeinen Formel 7, oder die Verbindung(en) der Formeln 5 bzw. 8 sehr reaktionsträge sein, kann auch bei höheren Temperaturen, höheren Drücken und in Anwesenheit von mehr Platinkatalysator gearbeitet werden.

Vorzugsweise wird die Reaktion in einem Lösungsmittel durchgeführt, welches insbesondere aprotisch sein sollte; Lösungsmittel oder Lösungsmittelgemische mit einem Siedepunkt bzw. Siedebereich von bis zu 160 °C, insbesondere von bis zu 120 °C bei jeweils 0,1 MPa (abs.) sind bevorzugt. Beispiele für Lösungsmittel sind Ester, wie Methylacetat, Ethylacetat, n- und iso-Propylacetat, n-, sec.- und t.-Butylacetat, Ethylformiat und Diethylcarbonat; Ether, wie Dioxan, Tetrahydrofuran, Diethylether, Di-n-propylether, Diisopropylether, Di-n-butylether, Ethylenglycolmonomethylether, Ethylenglycolmonoethylether, Diethylenglycoldimethylether und Anisol; chlorierte Kohlenwasserstoffe, wie Dichlormethan, Trichlormethan, Tetrachlormethan, 1,2-Dichlorethan, Trichlorethylen, Tetrachlorethylen und Chlorbenzol; Kohlenwasserstoffe, wie Pentan, n-Hexan, Hexan-Isomerengemische, Cyclohexan, Heptan, Oktan, Waschbenzin, Petrolether, Benzol, Toluol, Xylole; Ketone, wie Aceton, Methylethylketon, Methylisobutylketon; oder Gemische dieser Lösungsmittel.

Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden. Die Reaktion kann auch in einem Lösungsmittelgemisch mit einer Mischungslücke ausgeführt werden, wobei in jeder der Mischphasen jeweils mindestens ein Reaktionspartner löslich ist.

Die LC-Organosiloxane können gegebenenfalls im Gemisch mit Zusatzstoffen, beispielsweise mittels freier Radikale, durch Photovernetzung, dreidimensional vernetzt werden.

Die vernetzten LC-Organosiloxane können als Pigmente oder zur Herstellung von optischen Elementen, wie strukturierten Filtern, Polarisatoren und Verzögerungsplatten eingesetzt werden.

Die Herstellung der Verbindungen der allgemeinen Formel 5 ist bekannt, beispielsweise aus US-A-5,221,759.

In den nachfolgenden Beispielen sind, falls nicht jeweils anders angegeben,
a) alle Mengenangaben auf das Gewicht bezogen;
b) alle Drücke 0,10 MPa (abs.);
c) alle Temperaturen 20 °C;
d) die Abkürzungen verwendet:
   C = Kristallin
   N = Nematisch
   S = Smektisch
   Fp. = Schmelzpunkt
   BHT = 2,6-Ditert.-butyl-4-methylphenol

### Beispiele:

### Beispiel 1: 4-Allyloxybenzoesäure-(4-methacryloyloxycyclohexyl)ester, Beispielssubstanz 1

58 g (0,5 Mol) trans-1,4-Cyclohexandiol (hergestellt durch fraktionierte Kristallisation des Bisacetats des käuflichen cis/trans-Gemisches und Verseifung des abgetrennten trans-Bisacetats nach H. Batzer und G. Fritz, Makromol. Chemie 14 (1954) S. 179 ff) wurden in 300 ml Ethylenglycoldimethylether bei 85 °C gelöst, 25 g (0,25 Mol) Triethylamin zugegeben und dazu bei 85 °C 49 g (0,25 Mol) Allyloxybenzoesäurechlorid zugetropft. Nach 5 h Rühren bei 85 °C wurde abgekühlt, eingeengt und der Rückstand mit Toluol/Wasser ausgeschüttelt. Die organische Phase wurde getrocknet, eingeengt und der Rückstand in Methyl-tert.butylether bei 60 °C gelöst. Durch Zusatz von Heptan bis zur beginnenden Kristallisation und durch Abkühlen wurde das Produkt gereinigt. Erhalten wurden 30 g an 4-Allyloxybenzoesäure-(trans-4-hydroxycyclohexyl)-ester (27 %).

27,6 g (0,1 Mol) Allyloxybenzoesäure-(trans-4-hydroxycyclohexyl)ester, 0,1 g 2,6-Ditert.-butyl-4-methylphenol und 20,9 g (0,13 Mol) Methacrylsäureanhydrid wurden in 10 ml Toluol gelöst, 0,2 g 4-Toluolsulfonsäure zugegeben und das Gemisch unter Rühren auf 110 °C erwärmt. Nach 75 min. Rühren bei 110 °C wurden das Toluol und überschüssiges Methacrylsäureanhydrid abdestilliert, der Rückstand in 200 ml Methyl-tert.butylether gelöst und überschüssige Methacrylsäure mit 0,5 n Natronlauge ausgewaschen. Nach Waschen mit Wasser wurde mit Natriumsulfat getrocknet und zur Trockene eingeengt. Der Rückstand wurde mit 80 ml Diethylether aufgenommen und dann die Lösung abgekühlt, wobei das Zielprodukt auskristallisierte. Der Rückstand der eingeengten Mutterlauge wurde in Heptan bei 60 °C aufgenommen, ein ungelöster Anteil abgetrennt und eine zweite Fraktion des gesuchten Esters auskristallisiert. Durch Umkristallisieren der beiden Anteile aus Heptan wurde das Zielprodukt in 64 % Ausbeute erhalten. C₂₀H₂₄O₅ = 344,4. Fp. 82-84 °C, Klärpunkt 86 °C.

### Beispiel 2: 4-Allyloxyphenylessigsäure-(4-methacryloyloxymethyl-trans-cyclohexyl-1-methyl)ester, Beispielssubstanz 2

166,2 g (1 Mol) käuflicher 4-Hydroxyphenylessigsäuremethylester (Acros, D-41470 Neuss), 181,5 g (1,5 Mol) Allylbromid und 415 g Kaliumcarbonat wurden in 400 ml Methylethylketon suspendiert und das Gemisch unter Rühren auf Rückfluß erhitzt und dabei 6 h gehalten. Nach Abkühlung wurde filtriert und das Filtrat eingeengt und der Rückstand fraktioniert. In einem Siedebereich von 90-97 °C und bei einem Druck von 0,05 hPa wurden 173 g (83,8 %) des gesuchten Esters erhalten, der in üblicher Weise mit Methanol/KOH zur freien Säure verseift wurde. Die Säure war aus Benzin mit Kp. 100-140 umzukristallisieren und hatte dann einen Fp. von 82 °C.
Trans-1,4-Cyclohexandimethanol(Acros, D-41470 Neuss) wurde mit Methacrylsäure im Molverhältnis 1:1 in n-Pentan als Lösungsmittel und mit 4-Toluolsulfonsäure als Katalysator azeotrop monoverestert. 8,8 g (0,04 Mol) dieses flüssigen Monomethacrylats wurden mit 8,5 g (0,04 Mol) 4-Allyloxyphenylessigsäurechlorid (aus der oben beschriebenen Säure durch übliche Umsetzung mit Thionylchlorid hergestellt; Kp. bei 0,013 hPa 92-94 °C) und 4,5 g Triethylamin (0,045 Mol) in Toluol bei 60°C umgesetzt, abgekühlt, vom Aminhydrochlorid-Niederschlag abfiltriert, mit 0,2 n NaOH, dann Wasser, dann mit 0,2 n Salzsäure und nochmals mit Wasser gewaschen, azeotrop getrocknet und eingeengt. Das Zielprodukt ist flüssig.

### Beispiel 3: 4-(4-trans-3-Butenylcyclohexylmethyl)oxybenzoesäure-(4-methacryloyloxybutyl)ester, Beispielssubstanz 3

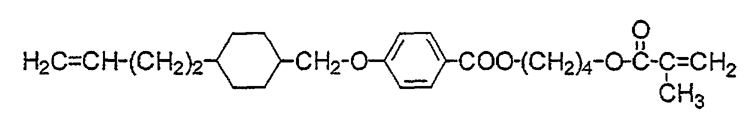

45 g (0,31 Mol) 1,4-Cyclohexandimethanol wurden in 750 ml Pyridin/Methylenchlorid (1:1) gelöst und dazu bei 0°C in 9 h 60 g (0,32 Mol) 4-Toluolsulfonsäurechlorid in 750 ml des gleichen Gemischs unter Rühren zugetropft. Nach 12 h weiterem Rühren bei 20° wurde eingeengt, der Rückstand mit Ether verdünnt, mit 2 n Schwefelsäure angesäuert und mit Wasser gewaschen. Nach Abfiltrieren eines Niederschlags von Bistosylat wurde der Rückstand eingeengt und ergab 58 g (62 %) des öligen Monotosylats. Durch Umsetzung dieser Menge mit 30,7 g (0,2 Mol) Hexamethyldisilazan in Toluol bei 110 °C bis zum Ende der Ammoniakentwicklung und Einengen im Vakuum wurde der Toluolsulfonsäureester des 1-Trimethylsilyloxymethylcyclohexan-4-methanols (gelbliches Öl, fast quantitativ) erhalten.

Aus 27 ml (0,3 Mol) Allylbromid und 8,5 g (0,35 Mol) Magnesium in insgesamt 230 ml Ether wurde bei 0 - 10 °C eine Grignardlösung hergestellt und die Lösung gleichzeitig mit einer Lösung des obigen Silylethers <gelöst in 100 ml Ether) bei 20 °C unter Rühren und in Gegenwart von 0,2 g LiCuBr₄ als Katalysator in Ether eingetropft (1 h). Dabei entstand ein Niederschlag. Nach 1 h Nachreaktion bei 35 °C und 12 h Rühren wurde das Gemisch auf Eiswasser gegossen und mit Salzsäure angesäuert und durchgerührt, wobei der Trimethylsilylrest abgespalten wurde. Nach Phasentrennung, Trocknen und Einengen wurde der Rückstand fraktioniert. Bei 12 hPa und 128-130 °C wurden 21 g (52 %) an 4-(But-3-enyl)-1-hydroxymethylcyclohexan erhalten.
Durch übliche Umsetzung dieses Alkohols mit 4-Toluolsulfonsäurechlorid/Pyridin wurde der Tosylester des Alkohols (gelbe Flüssigkeit; 91 % Ausbeute) erhalten.
Zu einer Lösung von 36,5 g (0,24 Mol) Kaliumtert.-butylat, gelöst in tert.-Butanol, wurden 65 g (0,2 Mol) des obigen Tosylesters zugegeben, unter Rühren auf Rückfluß erwärmt und dabei 8,5 h gerührt. Nach Abkühlung wurde hydrolylisiert, mit Methyl-tert.-butylether extrahiert, die organische Phase gewaschen (2 mal mit Wasser), getrocknet und eingeengt. Der Rückstand wurde nochmals zwischen 2 n NaOH und Methyl-tert.-butylether verteilt und der Reinigungsvorgang wiederholt. Erhalten wurden 37 g (60 %) an 4-(But-3-enylcyclohexylmethoxy)benzoesäuremethylester. Dieser Ester wurde in üblicher Weise mit KOH/Methanol zur freien Säure verseift und diese in bekannter Weise mit Thionylchlorid zum 4-(But-3-enylcyclohexylmethoxy)benzoesäurechlorid umgesetzt.

18 g (0,06 Mol) dieses Säurechlorids und 10,0 g (0,063 Mol) käufliches 1,4-Butandiolmonomethacrylat (Polysciences, D-69208 Eppelheim) wurden in 15 ml Toluol gelöst und dazu innerhalb 5 min. eine Lösung von 6,1g (0,067 Mol) Triethylamin, gelöst in 40 ml Toluol zugetropft. Das Gemisch wurde bei 50 °C gerührt nach 30 min. auf 80 °C erwärmt und noch 2 h dabei weitergerührt. Danach wurde abgekühlt, das ausgefallene Aminhydrochlorid abfiltriert, mit 0,5 n Salzsäure und dann mit Wasser gewaschen, getrocknet und eingeengt. Der Rückstand wurde über eine Kieselgelsäule gereinigt. Das Zielprodukt hatte danach einen Fp. von 22-25 °C.

### Beispiel 4 4'-Allyloxy-[1,1']biphenyl-4-carbonsäure-(6-methacryloyloxyhexyl)ester, Beispielssubstanz 4

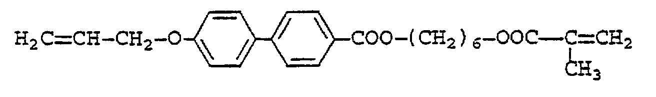

Aus käuflicher 4'-Hydroxy-[1,1']biphenyl-4-carbonsäure (Aldrich, D-89555 Steinheim) wurde mit Methanol und Schwefelsäure als Katalysator der Methylester der Säure hergestellt und daraus mit Kaliumcarbonat/Allylbromid in Methylethylketon als Lösungsmittel 4'-Allyloxy[1,1']biphenyl-4-carbonsäuremethylester (Fp. 149 °C) hergestellt. Durch übliche Verseifung dieses Esters mit KOH/Methanol wurde die freie Carbonsäure erhalten, die durch ebenfalls übliche Umsetzung der Säure mit Thionylchlorid in das Säurechlorid überführt wurde. 9,4 g (34,5 mmol) dieses Säurechlorids und 0,1 g BHT wurden in Toluol gelöst und dazu unter Rühren eine Lösung von 5,5 g (34,5 mmol) 1,4-Butandiol-monomethacrylat und 4.0 g (39,7 mmol) Triethylamin, gelöst in Toluol, bei Raumtemperatur zugetropft. Danach wurde für 90 min auf 45 °C erhitzt, abgekühlt, vom Triethylaminhydrochlorid abfiltriert und das Filtrat aufgearbeitet. Das Rohprodukt wurde aus Isopropanol umkristallisiert und wies dann folgendes Phasenverhalten auf: C 68 S < 120 I (Zersetzung).

### Beispiel 5: 4-Allyloxybenzoesäure-[4-(6-methacryloylhexyl)cyclohexyl]-ester, Beipielssubstanz 5

55,2 g (0,2 Mol) an nach Beispiel 1 hergestelltem Allyloxybenzoesäure-(trans-4-hydroxycyclohexyl)ester wurden in 300 ml trockenem Toluol gelöst und dazu 43 g (0,205 Mol) 6-Bromhexansäurechlorid (aus der freien Säure durch übliche Umsetzung mit Thionylchlorid hergestellt; Kp 60-62 °C bei 0,04 mbar) bei 105 °C in 60 min. unter Rühren zugetropft. Nach weiteren 90 min. Rühren bei 105 °C wurde das Lösungsmittel im Vakuum abgezogen und der Rückstand mit Petrolbenzin/Methyl-tert.-butylether (20 : 1) auskristallisiert. Erhalten wurden 83 g (92 %) an 4-Allyloxybenzoesäure-trans-[4-(6-bromhexanoyl)-cyclohexyl]-ester, Schmp. 56 °C. 79 g (0,174 Mol) dieses Esters, 25 g (0,21 Mol) Kaliummethacrylat und 0,2 g 2,6-Ditert.-butyl-4-methylphenol (Stabilisator) wurden in 400 ml Dimethylformamid gelöst und das Gemisch unter Rühren 3 h auf 70 - 75 °C erhitzt. Danach wurde das Lösungsmittel im Vakuum abdestilliert, der Rückstand mit 400 ml Methyl-tert.-butylether aufgenommen und die Lösung mit Wasser, 0,05 n NaOH und nochmals mit Wasser gewaschen, getrocknet und eingeengt. Der Rückstand wurde aus Methanol umkristallisiert. Erhalten wurden 70 g ( 87,5 %) der Titelverbindung, die bei 50 °C schmilzt und bei 55 °C klärt.

### Beispiel 6 (Vergleichsbeispiel;) Bekanntes flüssig-kristallines Silicon, Beispielssubstanz 6

71 g (0,13 Mol) 4-Allyloxybenzoesäurecholesterinester wurden mit 170 ml Toluol versetzt. Die Suspension wurde unter Rühren zum Sieden gebracht und Toluol azeotrop andestilliert. Nach Abkühlen auf ca. 60 °C wurden 21 g (0,351 Mol) 1,3,5,7-Tetramethylcyclotetrasiloxan und 0.5 g einer 0.5 Gew.%igen Lösung des Cyclooctadienyldichloroplatin-Katalysators in Methylenchlorid zugegeben. Die Reaktionslösung wurde auf 85 °C erwärmt und für 1 Stunde gerührt: Nach Abkühlen auf ca. 40 °C wurden 65.5 g (0,194 Mol) 4-Allyloxybenzoesäure-(4-methacryloyloxyphenyl)ester, 0.08 g (0,035 Mol) BHT und 1.06 g einer 0.5 Gew.%-igen Lösung des Cyclooctadienyldichloroplatin-Katalysators in Methylenchlorid zugegeben. Die Lösung wurde anschließend auf ca. 75 °C erwärmt und für 1,5 Stunden gerührt. Nach Abkühlen auf Raumtemperatur wurden 39.4 g (0,116 Mol) 4-Allyloxybenzoesäure-(4-methacryloyloxphenyl)ester und 0.078 g (0,035 Mol) BHT zugegeben. Anschließend wurde die Lösung über eine kurze Celite-Säule filtriert und 4.92 g des Photoinitiators Irgacure 907 zugegeben.
Die Lösung wurde mittels eines Dünnschichtverdampfers bei 25 mbar Druck und einer Heizmanteltemperatur von 90°C vom Lösungsmittel befreit (Restgehalt < 1 Gew.% Toluol).
Der so erhaltene Flüssigkristall besitzt einen Glasübergang bei ca. 15°C. Die Klärtemperatur (Peak) von cholesterisch zu isotrop liegt bei 146 °C. Die Viskosität beträgt bei 90°C ca. 1500 mPas.
Bei 90 °C orientierte und UV-vernetzte dünne Filme des Materials weisen nach dem Abkühlen auf Raumtemperatur eine Reflexionswellenlänge von 710 nm auf.
Das vernetzte Material besitzt eine Glasübergangstemperatur von 83 °C. Der durch Behandlung mit Chloroform aus dem vernetzten Material extrahierbare Anteil beträgt 14 Gew.-%.

### Beispiel 7 Flüssig-kristallines, UV-beständiges Silicon; Pigmentgrundmischung, Beipielssubstanz 7

In völlig gleicher Weise, wie in Beispiel 6 beschrieben, wurde aus 4-Allyloxybenzoesäurecholesterinester, 1,3,5,7-Tetramethylcyclotetrasiloxan und 4-Allyloxybenzoesäure-[4-(6-methacryloylhexyl)cyclohexyl]-ester = Beipielssubstanz 5 ein Oligomer hergestellt und in ebenfalls gleicher Weise, wie in Beipiel 6 beschrieben, mit der äquimolaren Menge an 4-Allyloxybenzoesäure-[4-(6-methacryloylhexyl)cyclohexyl]-ester abgemischt und die Lösung mittels eines Dünnschichtverdampfers bei 25 mbar Druck und einer Heizmanteltemperatur von 90°C vom Lösungsmittel befreit (Restgehalt < 1 Gew.% Toluol).
Der so erhaltene Flüssigkristall besitzt einen Glasübergang bei ca. -11°C. Die Klärtemperatur (Peak) von cholesterisch zu isotrop liegt bei 67 °C. Die Viskosität beträgt bei 90°C ca. 1190 mPas.
Bei 40 °C orientierte und UV-vernetzte dünne Filme des Materials weisen nach dem Abkühlen auf Raumtemperatur eine Reflexionswellenlänge von 555 nm auf.

Das vernetzte Material besitzt eine Glasübergangstemperatur von 62 °C. Der durch Behandlung mit Chloroform aus dem vernetzten Material extrahierbare Anteil beträgt 11 Gew.-%.

### Beispiel 8 UV-Stabilität erfindungsgemäßer Verbindungen im Vergleich zu bekannten Vernetzer-Derivaten

Die Bestimmung der UV-Stabilität von monomeren Verbindungen erfolgte nach folgendem Verfahren:
10 mg Substanz wurden eingewogen, 10 ml Lösemittel zugegeben (in der Regel Dichlorethan; Fa. Aldrich D-89555 Steinheim, spectrophotometric grade) und auf eine Verdünnung mit einer optischen Dichte von ca. 1 bei der Hauptabsorptionsbande im UV-Bereich eingestellt. Die Probe wurde mit einer 150 W Xenon-Lampe XBO150, LOT-Lampe mit Quarzglaskondensor und H₂O-Filter
bestrahlt (Bestrahlungsstärke der Quarzküvette 250 mW/cm²). Als Maß für die UV-Stabilität wurde die Veränderung der UV-Spektren in Abhängigkeit von der Zeit bestimmt.

Verbindungen mit einer Carbonsäurephenylesterkomponente zeigten eine deutliche Veränderung, hervorgerufen durch eine Photo-Fries-Umlagerung. Die neuen Banden näherten sich dem sichtbaren Teil des Spektrums, wobei Ausläufer bis ins Blaue hineinreichen können. Das führte zu einem Gelbstich solcher Lösungen aus diesen Monomeren.

Vergleich der UV-Stabilitäten der Beispielsubstanzen 1 bis 5 mit der von 4-Allyloxybenzoesäure-(4'-methacryloyloxy)phenylester, bekannt aus US-A-5,211,877; als Vergleichsubstanz bezeichnet:

Zum unmittelbaren Vergleich werden die Werte der optischen Dichte bei 350 nm bzw. 400 nm nach 10 min Bestrahlungszeit angegeben, immer bezogen auf eine optische Dichte von 1 der unbestrahlten Substanz.

| | unbestrahlt | nach 10 min | 250 mW/cm ² Xenon | |
|---|---|---|---|---|
| | λ max [nm] | λ max[nm] | OD 350nm | OD 400 nm |
| Beispielsubstanz 1 | 256 | 256 | 0,00 | 0,00 |
| Beispielsubstanz 2 | 256 | 256 | 0,00 | 0,00 |
| Beispielsubstanz 3 | 258 | 258 | 0,00 | 0,00 |
| Beispielsubstanz 4 | 293 | 293 | 0,00 | 0,00 |
| Beispielsubstanz 5 | 256 | 256 | 0,00 | 0,00 |
| Beispielsubstanz 6 (Vergleich) | 262 | 353 | 0,1 | 0,02 |

### Beispiel 9: UV-Stabilität von erfindungsgemäßen flüssigkristallinen LC-Siliconen im Vergleich zu bekannten flüssigkristallinen Verbindungen.

Die Bestimmung der UV-Stabilität erfolgte nach folgendem Verfahren:
Ein ca. 20 µm dicker, vernetzter Film des als Beispielsubstanz 7 genannten flüssigkristallinen, UV-beständigen Silicons wurde einer Langzeit-Sonnenbestrahlung im Suntest CPS+ der Fa. Heraeus Industrietechnik (D-63450 Hanau) ausgesetzt. Die Bedingungen waren : Bestrahlungsstärke 750 W/m² im Spektralbereich 300 bis 800 nm, Temperatur der Filme 40 °C, Bestrahlungsdauer 1000 h.
In analoger Weise wurde die Beispielsubstanz 6 (Vergleichsbeispiel) bestrahlt.

Die Werte der optischen Dichten bei 350 nm und 400 nm vor der Bestrahlung und nach 1100 h Bestrahlungszeit wurden bestimmt:

| | OD 350 nm | OD 400 nm | OD 350 nm | OD 400 nm |
|---|---|---|---|---|
| | vor Bestrahlung | | Nach 1100 h Bestrahlung | |
| Beispielsubstanz 7 | 0.03 | 0.02 | 0.06 | 0.02 |
| Vergleichssubstanz = Beispielssubstanz 6 | 0.237 | 0.06 | 0.40 | 0.19 |

## Patentansprüche

1. Vernetzbare Flüssig-Kristalline (LC)-Organosiloxane, enthaltend Einheiten der allgemeinen Formel 1,
[R_{b}Mes_{c}SiO_{(4-b-c)/2}] (1),
in der
**R** C₁-C₄-Alkylreste,
**Mes** mindestens eine Gruppe der allgemeinen Formel 2 und gegebenenfalls der allgemeinen Formel 3
**b** die Werte 0, 1 oder 2 und
**c** die Werte 1, 2, 3 oder 4 bedeuten,
mit der Maßgabe, daß die Summe der Werte aus b und c maximal 4 beträgt,
wobei die Gruppen Mes der allgemeinen Formeln 2 und 3 folgenden Aufbau zeigen
-(CH₂)ₚ-(O)_{q}-A-[B-A]ᵣ-E-F-VN (2),
-(CH₂)ₘ-(O)ₙ-(A)ₜ-Q-X (3),
in denen
**A** einen zweiwertigen Rest aus der Gruppe 1,4-Cyclohexylenring, 4,4'-Bicyclohexylenrest, 1,4-Phenylenring, 2,6-Naphthylenrest, 2,7-Naphthylenrest, 2,5-(1,3-Dioxanylen)ring und Pyrimidinylrest,
**Q** einen zweiwertigen Rest aus der Gruppe -COO-, -OCO-, -O-, chemische Bindung oder -O-(C=O)-O-,
**X** einen Cholesteryl-, Dihydrocholesteryl-, Doristeryl-, Isosorbidyl-, Isomannidyl- oder Cholsäurerest oder einen unsubstituierten oder substituierten Rest, der ausgewählt wird aus 1,4-Phenylen-, 4,4'-Biphenylyl-, 1,4-Cyclohexylen-, 4,4'-Bicyclohexylen-, 4,4'-Cyclohexylenphenylen, 2,5-(1,3-Dioxanylen)- und Pyrimidinylrest, wobei der Substituent ein C₁- bis C₅-Alkoxyrest, C₁- bis C₅-Alkylrest, Cyanorest, Chlorrest oder Nitrorest sein kann,
**B** einen zweiwertigen Rest aus der Gruppe chemische Bindung, -O-CH₂-, -CH₂-O-, -CH₂-CH₂-, -CH=CH-, -COO- und -OCO-,
**E** einen zweiwertigen Rest aus der Gruppe chemische Bindung,-O-, -COO-, -OCO- und -CH₂-O-,
**F** eine Kette aus 0 bis 11 CH₂-Gruppen, in der einzelne, einander nicht benachbarte CH₂-Gruppen durch Sauerstoff ersetzt sein können,
**VN** eine Gruppe -COO-CH=CH₂, -COO-C(CH₃)=CH₂, -O-CH=CH₂, eine Oxiranylgruppe, oder eine Gruppe -(CH₂)ᵤ-OCH=CH₂,
**u** ganze Zahlen von 2 bis 8,
**m und p** ganze Zahlen von 3 bis 7,
**n und q** 0 oder 1, und
**t** ganze Zahlen von 1 bis 3 ,
**r** ganze Zahlen von 1 bis 3 bedeuten,
mit der Maßgabe, daß durch die Kombinationen von Ringen A mit Bindegruppen B keine Phenylesterderivate aliphatischer, aromatischer oder heteroaromatischer Carbonsäuren möglich sein sollen.

2. Vernetzbare LC-Organosiloxane nach Anspruch 1, welche 1 bis 70 Einheiten der allgemeinen Formel 1 enthalten.

3. Verfahren zur Herstellung der vernetzbare LC-Organosiloxane nach Anspruch 1 oder 2, bei dem Organosiliciumverbindungen, enthaltend Einheiten der allgemeinen Formel 7
[R_{b}H_{c}SiO_{(4-b-c)/2}] (7)
in der R, b und c die in der allgemeinen Formel 1 angegebenen Bedeutungen aufweisen, umgesetzt werden mit Verbindungen der allgemeinen Formeln 5
CH₂=CH-(CH₂)ₚ₋₂-(O)_{q}-A-[B-A]ᵣ-E-F-VN (5),
und gegebenenfalls 8
CH₂=CH-(CH₂)ₘ₋₂-(O)ₙ-(A)ₜ-Q-X (8),
worin **A, B, E, F, VN, Q, X, m, n, p, q, r** und **t** die in Anspruch 1 angegebenen Bedeutungen aufweisen.

4. Verfahren zu Vernetzung der LC-Organosiloxane gemäß Anspruch 1, bei dem die LC-Organosiloxane mittels freier Radikale dreidimensional vernetzt werden.

5. Verfahren gemäß Anspruch 4, bei dem die LC-Organosiloxane gemäß Anspruch 1 im Gemisch mit Vernetzern der allgemeinen Formel 6
VN-(CH₂)ᵣ-[M-A]ₜ-M-(CH₂)ᵣ-VN (6),
in der
**M** ein Sauerstoffatom, eine Carboxylgruppe oder eine Oxycarbonylgruppe bedeutet und **VN, A, r** und **t** die in Anspruch 1 aufgeführten Bedeutungen annehmen können, vernetzt werden.

6. Vernetzte LC-Organosiloxane, erhältlich nach dem Verfahren gemäß Anspruch 4 oder 5.

7. Verwendung der vernetzten LC-Organosiloxane gemäß Anspruch 6 als Pigmente.

8. Verwendung der vernetzten LC-Organosiloxane gemäß Anspruch 6 in optischen Elementen.

## Claims

1. Crosslinkable liquid-crystalline (LC) organosiloxanes containing units of the general formula 1
[R_{b}Mes_{c}SiO_{(4-b-c)/2}] (1)
in which
**R** are C₁-C₄-alkyl radicals,
**Mes** is at least one group of the general formula 2 and, if desired, of the general formula 3,
**b** has the value 0, 1 or 2, and
**c** has the value 1, 2, 3 or 4,
with the proviso that the sum of the values of b and c is a maximum of 4,
where the **Mes** groups of the general formulae 2 and 3 exhibit the following structure:
-(CH₂)ₚ-(O)_{q}-A-[B-A]ᵣ-E-F-VN (2)
-(CH₂)ₘ-(O)ₙ-(A)ₜ-Q-X (3)
in which
**A** is a divalent radical from the group consisting of a 1,4-cyclohexylene ring, a 4,4'-bicyclohexylene radical, a 1,4-phenylene ring, a 2,6-naphthylene radical, a 2,7-naphthylene radical, a 2,5-(1,3-dioxanylene) ring and a pyrimidinyl radical,
**Q** is a divalent radical from the group consisting of -COO-, -OCO-, -O-, a chemical bond and -O-(C=O)-O-,
**X** is a cholesteryl, dihydrocholesteryl, doristeryl, isosorbidyl, isomannidyl or cholic acid radical or an unsubstituted or substituted radical selected from the group consisting of 1,4-phenylene, 4,4'-biphenylyl, 1,4-cyclohexylene, 4,4'-bicyclohexylene, 4,4'-cyclohexylenephenylene, 2,5-(1,3-dioxanylene) and pyrimidinyl radicals, where the substituent can be a C₁- to C₅-alkoxy radical, a C₁- to C₅-alkyl radical, a cyano radical, a chlorine radical or a nitro radical,
**B** is a divalent radical from the group consisting of a chemical bond, -O-CH₂-, -CH₂-O-, -CH₂-CH₂-, -CH=CH-, -COO- and -OCO-,
**E** is a divalent radical from the group consisting of a chemical bond, -O-, -COO-, -OCO- and -CH₂-O-,
**F** is a chain of from 0 to 11 CH₂ groups, in which individual, non-adjacent CH₂ groups may be replaced by oxygen,
**VN** is a -COO-CH=CH₂, -COO-C(CH₃)=CH₂ or -O-CH=CH₂ group, an oxiranyl group or a -(CH₂)ᵤ-OCH=CH₂ group,
**u** is an integer from 2 to 8,
**m and p** are integers from 3 to 7,
**n and q** are 0 or 1,
**t** is an integer from 1 to 3, and
**r** is an integer from 1 to 3,
with the proviso that the combinations of rings A with binding groups B do not make possible phenyl ester derivatives of aliphatic, aromatic or heteroaromatic carboxylic acids.

2. Crosslinkable LC organosiloxanes according to Claim 1 which contain from 1 to 70 units of the general formula 1.

3. Process for the preparation of the crosslinkable LC organosiloxanes according to Claim 1 or 2, which comprises reacting organosilicon compounds containing units of the general formula 7
[R_{b}H_{c}SiO_{(4-b-c)/2}] (7)
in which **R, b** and **c** have the meanings given in the general formula 1, with compounds of the general formulae 5
CH₂=CH-(CH₂)ₚ₋₂-(O)_{q}-A-[B-A]ᵣ-E-F-VN (5)
and, if desired, 8
CH₂=CH-(CH₂)ₘ₋₂-(O)ₙ-(A)ₜ-Q-X (8)
in which **A, B, E, F, VN, Q, X, m, n, p, q, r** and **t** have the meanings given in Claim 1.

4. Process for crosslinking the LC organosiloxanes according to Claim 1, in which the LC organosiloxanes are three-dimensionally crosslinked by means of free radicals.

5. Process according to Claim 4, in which the LC organosiloxanes according to Claim 1 are crosslinked as a mixture with crosslinking agents of the general formula 6
VN-(CH₂)ᵣ-[M-A]ₜ-M-(CH₂)ᵣ-VN (6)
in which
**M** is an oxygen atom, a carboxyl group or an oxycarbonyl group, and
**VN, A, r** and **t** can adopt the meanings given in Claim 1.

6. Crosslinked LC organosiloxanes obtainable by the process according to Claim 4 or 5.

7. The use of the crosslinked LC organosiloxanes according to Claim 6 as pigments.

8. The use of the crosslinked LC organosiloxanes according to Claim 6 in optical elements.

## Revendications

1. Organosiloxanes cristallins liquides (CL) réticulables, renfermant des motifs de formule générale 1,
[R_{b}Mes_{c}SiO_{(4-b-c)/2}] (1),
dans laquelle
R représente des radicaux alkyle en C₁₋₄,
Mes représente au moins un groupe de formule générale 2 et éventuellement de formule générale 3
b vaut 0, 1 ou 2 et
c vaut 1, 2, 3 ou 4,
à condition que la somme des valeurs de b et c soit au maximum de 4,
où les groupes Mes de formules générales 2 et 3 présentent la structure suivante
-(CH₂)ₚ-(O)_{q}-A-[B-A]ᵣ-E-F-VN (2),
-(CH₂)ₘ-(O)ₙ-(A)ₜ-Q-X (3),
dans lesquelles
A présente un radical bivalent parmi le groupe constitué d'un noyau 1,4-cyclohexylène, d'un radical 4,4'-bicyclohexylène, d'un noyau 1,4-phénylène, d'un radical 2,6-naphtylène, d'un radical 2,7-naphtylène, d'un noyau -2,5-(1,3-dioxanylène) et d'un radical pyrimidinyle,
Q représente un radical bivalent parmi le groupe constitué de -COO-, de -OCO-, de -O-, d'une liaison chimique ou de -O-(C=O)-O-,
X représente un radical cholestéryle, dihydrocholestéryle, doristéryle, isosorbidyle, isomannidyle ou acide cholique ou un radical non substitué ou substitué choisi parmi les radicaux 1,4-phénylène, 4,4'-biphénylyle, 1,4-cyclohexylène, 4,4'-bicyclohexylène, 4,4'-cyclohexylènephénylène, 2,5-(1,3-dioxanylène) et pyrimidinyle, le substituant pouvant être un radical alcoxy en C₁ à C₅, un radical alkyle en C₁ à C₅, un radical cyano, un radical chloro ou un radical nitro,
B représente un radical bivalent parmi le groupe constitué d'une liaison chimique, de -O-CH₂-, de -CH₂-O-, de -CH₂-CH₂-, de -CH-CH-, de -COO- et de -OCO-
E représente un radical bivalent parmi le groupe constitué d'une liaison chimique, de -O-, de -COO-, de -OCO- et de -CH₂-O-,
F représente une chaîne de 0 à 11 groupes CH₂, dans laquelle des groupes CH₂ individuels non adjacents peuvent être remplacés par un oxygène,
VN représente un groupe -COO-CH=CH₂, -COO-C(CH₃)=CH₂, -O-CH=CH₂, un groupe oxiranyle, ou un groupe -(CH₂)ᵤ-OCH=CH₂,
u représente des entiers de 2 à 8,
m et p représentent des entiers de 3 à 7,
n et q valent 0 ou 1, et
t représente des entiers de 1 à 3,
r représente des entiers de 1 à 3,
à condition que par les combinaisons de noyaux A avec des groupes de liaison B, aucun dérivé esterphénylique d'acides carboxyliques aliphatiques, aromatiques ou hétéro-aromatiques ne soit possible.

2. Organosiloxanes CL réticulables selon la revendication 1, renfermant de 1 à 70 motifs de formule générale 1.

3. Procédé de préparation des organosiloxanes CL réticulables selon la revendication 1 ou 2, dans lequel des composés organosiliciés renfermant des motifs de formule générale 7,
[R_{b}H_{c}SiO_{(4-b-c)/2}] (7),
dans laquelle R, b et c ont les significations indiquées dans la formule générale 1, sont mis à réagir avec des composés de formules générales 5
CH₂=CH-(CH₂)ₚ₋₂-(O)_{q}-A-[B-A]ᵣ-E-F-VN (5),
et éventuellement 8
CH₂=CH-(CH₂)ₘ₋₂-(O)ₙ-(A)ₜ-Q-X (8),
dans lesquelles A, B, E, F, VN, Q, X, m, n, p, q, r et t ont les significations indiquées à la revendication 1.

4. Procédé de réticulation des organosiloxanes CL selon la revendication 1, dans lequel les organosiloxanes CL sont réticulés de manière tridimensionnelle au moyen de radicaux libres.

5. Procédé selon la revendication 4, dans lequel les organosiloxanes CL selon la revendication 1 sont réticulés en mélange avec des agents de réticulation de formule générale 6
VN-(CH₂)ᵣ-[M-A]ₜ-M-(CH₂)ᵣ-VN (6),
dans laquelle
M représente un atome d'oxygène, un groupe carboxy ou un groupe oxycarbonyle, et
VN, A, r et t peuvent adopter les significations indiquées à la revendication 1.

6. Organosiloxanes CL réticulés pouvant être obtenus par le procédé selon la revendication 4 ou 5.

7. Utilisation des organosiloxanes CL réticulés selon la revendication 6 en tant que pigments.

8. Utilisation des organosiloxanes CL réticulés selon la revendication 6 dans des éléments optiques.
